# EUROPEAN PATENT SPECIFICATION

(11) **EP 2 870 293 B1**
(45) Date of publication and mention of the grant of the patent: **09.09.2020**
(21) Application number: 13739855.8
(22) Date of filing: 04.07.2013
(51) Int. Cl.: E01H 1/00, E01H 1/08

(54) **DEVICE AND METHOD FOR MAINTENANCE OPERATIONS ON AN ARTIFICIAL LAWN**
VORRICHTUNG UND VERFAHREN ZUR DURCHFÜHRUNG VON WARTUNGSARBEITEN AUF KUNSTRASEN
DISPOSITIF ET PROCÉDÉ POUR L'ENTRETIEN D'UN GAZON ARTIFICIEL

(30) Priority: 05.07.2012 NL 2009128
(43) Date of publication of application: 13.05.2015
(73) Proprietor: Ten Cate Thiolon B.V., 7443 RE Nijverdal (NL)
(72) Inventor: VLIEGEN, Guido Joseph Matheus, NL-7443 RE Nijverdal (NL); HARMELING, Francesco Antonius Lodewijk, NL-7443 RE Nijverdal (NL)
(74) Representative: Nederlandsch Octrooibureau
(86) International application number: PCT/NL2013/050495
(87) International publication number: WO 2014/007627

(56) References cited:
- DE-A1- 4 025 461
- DE-A1- 19 958 457
- GB-A- 2 389 037
- US-A- 3 644 954

## Description

The invention relates to a device for carrying out maintenance operations on an artificial lawn, in particular an artificial grass sports field.

The invention further relates to a method for carrying out maintenance operations on an artificial lawn.

For years artificial lawns have been used for many applications as an alternative to natural grass. Sports fields, for example, are frequently converted into artificial grass sports fields in recent years. Said artificial grass sports fields comprise a substrate, from which fibres distributed thereover project in upward direction. Commonly used techniques are the tufting or weaving-in of the fibres. The various characteristics of the artificial grass sports field, such as the rolling speed, coefficient of friction, stiffness, resilience, elasticity, damping etc, are determined by the selection of the various forms and materials.

Many current artificial grass sports fields are provided with infill material for improving the above characteristics and in general the playing characteristics. The infill material, for example small rubber granules mixed with sand, is distributed between the fibres, on the one hand providing support for the fibres, so that the latter will less easily tend to assume a flat orientation, and on the other hand, among other characteristics, enhancing the damping characteristics of the lawn.

An important advantage of artificial lawns is the fact that they require less maintenance and can be played on more intensively than natural grass lawns. Furthermore, artificial lawns do not require irrigation and the lawn need not be mown. These are important reasons for changing over from a natural lawn to an artificial lawn.

An increased playing intensity affects certain characteristics of the lawn, however. With most sports there the lawn is not used in a uniform manner, for example. Around a goal area, for example, the lawn is often played on more intensively than at the sides. As a result, the infill material is no longer uniformly distributed over the lawn as was the case at the time of infilling. This non-uniform distribution of the infill material has a negative influence on the playability of the lawn and on the players' perception.

In order to guarantee a desired quality, organisations such as the International football associations UEFA and Fl FA impose certain requirements as regards artificial grass sports fields. Thus a classification in stars is used for determining whether certain artificial grass sports fields meet the standard for playing Europe League or Champions League matches thereon, for example.

Already in 2009 FIFA initiated a programme wherein preferred producers of artificial grass sports fields where included. Agreements have been made with said preferred producers concerning quality guarantees in the field of production, installation and maintenance of the artificial grass sports field. This emphasises not only the importance of quality during production and installation, but also the importance of maintenance. The artificial grass sports field may meet all the requirements that are made at the time of its installation, but it must continue to meet said requirements also after a particular period of time or playing interval.

Various devices for maintaining artificial grass sports fields are known, inter alia for removing dirt from the field or redistributing or renewing infill material. From WO 2009 091452 A2 there is known a device by means of which dirt can be removed from the lawn. To that end a device is disclosed which can be hitched to a tractor and by means of which infill material and dirt is brushed off the lawn, which is subsequently filled with new infill material.

From GB 2 306 306 A there is known a device for brushing artificial lawns. The rotating, triple brush system disclosed therein can be towed by a tractor, with the rotating brushes redistributing the infill material over the lawn. In order to achieve an adequate redistribution of the infill material and thus meet prescribed quality requirements, the operator of the tractor must carefully check the result of the brushing operations and, where necessary, work the lawn anew in order to have the brushes distribute the infill material anew.

GB2389037 A shows an apparatus for breaking up and dislodging compacted sand. The apparatus includes a wheeled carriage with a multiple array of nozzles to supply a mixture of fluids, but without excess wetting. The apparatus can include sensors and indicators for issuing a warning alarm upon liquid tank low levels or exhaustion, or upon any interruption or blockage in the water flow.

Not only are such operations labour-intensive, but they also must be carried out during the daytime because a particular minimum light intensity is needed in order to be able to determine whether the infill material is distributed sufficiently uniformly after the maintenance work. This requires a high degree of accuracy and discipline on the part of the person who carries out the maintenance work with some regularity. In practice it appears that many sports fields are maintained by volunteers, who can to a lesser extent be required and expected to carry out the maintenance work with the right degree of accuracy and discipline. Accordingly, it is not possible to ensure the quality after the installation of the lawn.

It is an object of the present invention to provide a method and a device by means of which at least some of the above problems can be solved.

It is in particular an object of the present invention to provide a method and a device by means of which maintenance can be carried out in such a manner that quality requirements for the artificial lawn can be met.

The above objectives are achieved with a device according to claim 1 for carrying out maintenance operations on an artificial lawn, in particular an artificial grass sports field, which device is movable across the artificial lawn. The device comprises maintenance means for carrying out maintenance operations on the artificial lawn and drive means for moving the device autonomously across the artificial lawn. The device further comprises control means for controlling the maintenance means and the drive means on the basis of a maintenance plan.

Artificial grass sports field require less maintenance than natural grass sports fields. However, also artificial lawns, and in particular artificial grass sports field that are used for competition purposes, must meet stringent requirements. The term "maintenance" as used within the framework of the present application includes all forms of maintenance on artificial lawns, such as, albeit not limited thereto, removing dirt, leaves, snow, redistributing infill material, replacing infill material, etc.

Since artificial grass sports fields are usually managed by a sports club after their installation, their maintenance is not at all times ensured. In the case of soccer fields, for example, there are sports organisations, such as Fl FA, which impose requirements as regards the use of artificial lawns for certain types of soccer matches. In order to guarantee the quality of the artificial lawn and ensure that the artificial lawn will continue to meet the requirements made thereof for a certain period of time, also after use, it is necessary to carry out maintenance on the lawn at regular intervals and after a particular period of use.

The drawback of known maintenance devices is that the maintenance to be carried out depends on a user (usually a facility manager of the sports club). That is, it is up to the user to determine which maintenance operations are carried out, where they are carried out, at what intervals and with which intensity. Usually it is left to the discretion of the facility manager or maintenance manager to decide if the lawn indeed requires maintenance. In those cases a visual determination is made whether certain of the lawn require specific maintenance, such as the addition of infill material.

A maintenance device according to the invention does not have these drawbacks. The maintenance device comprises maintenance means which are designed for carrying out maintenance work or maintenance operations on the artificial lawn. Said work may comprise operations such as the removal of leaves or snow, but also the removal of dirt or of objects present on the lawn. The possible maintenance operations also include brushing the artificial lawn, redistributing, replacing or removing or adding infill material, and moisturising the lawn or, for example, adding anti-algae agents.

The maintenance device is designed for moving across the artificial lawn. The device to that end comprises drive means which drive at least one axle with wheels.

A non-self-propelled maintenance device has the drawback that it is dependent on the user. That is, maintenance is carried out only when the user is able to do so. Thus, nocturnal maintenance is usually excluded and maintenance is frequently planned at times during which the lawn could also be played on. If the control means are designed to control the drive means, the device can move forward autonomously and the above problem does not occur. Maintenance can also take place at night, therefore, so that the period during which the lawn can be played on is extended.

The control means are arranged such that they can control the maintenance means on the basis of a maintenance plan. According to an embodiment, the control means to that end comprise control circuits designed to control the maintenance means. Said control circuits comprise at least a central processing unit, CPU, and a memory unit in which the maintenance plan can be stored. Said maintenance plan comprises information regarding the manner in which and the time at which the maintenance means are controlled.

In a simple embodiment, the maintenance plan may for example only comprise data regarding the position on the lawn where maintenance is to be carried out. In another embodiment, the maintenance plan comprises more data, however, such as a different intensity with which maintenance is to be carried out at specific positions on the lawn. It is conceivable that according to the maintenance plan the goal area of an artificial grass sports fields must be brushed more intensively than the areas near the sides of the lawn.

Maintenance devices already known from the prior art are dependent on the user. It is the user who determines the manner in which and the time at which the maintenance is to be carried out. A maintenance device according to the present invention, on the other hand, carries out maintenance according to the maintenance plan. Said plan can be loaded into the device as a programme prior to the carrying out of the maintenance. Thus, the control means can be provided with data from said programme in which the quality requirements made of the lawn are incorporated, and the device will be controlled accordingly. Thus it is possible, using a maintenance device according to the present invention, to meet the quality requirements for the lawn not only during a short period after the installation of the lawn but also during a longer period of use.

The control means may be set so that the maintenance operations are not terminated until the requirements made have been met. That is, the control means know, for example, that brushing must take place, or that a particular minimum amount of moisture must be added to the lawn during the summer period or before a planned match.

In another embodiment, the device is provided with a battery or other energy source for providing energy to the drive means, and in a special embodiment the device is capable of driving independently to a charging station for charging the battery in case the battery voltage is too low. Since a battery can only provide energy to a device for a limited period of time, the device can be connected to a charging station for charging the battery. The control means may to that end be equipped with a positioning system for finding the charging station autonomously and being connected there to an external power supply for charging the battery.

In a further embodiment, the drive means can be controlled by the control means on the basis of the maintenance plan.

The maintenance plan in the control means comprises all the information required for carrying out the maintenance. Said information comprises at least information regarding the manner in which maintenance is to be carried out, for example brushing, and regarding the location where said maintenance is to be carried out, for example all over the lawn or near the goal area. In this further embodiment, the drive means are controlled on the basis of the maintenance plan, that is, the device moves autonomously across the lawn and the route it follows is a route based on the maintenance plan. This may for example imply that the device moves across the lawn according to a fixed route. This may mean movement along horizontal or diagonal paths, but also a circular movement. Alternatively, the device may also move across the lawn according to a random route and carry out maintenance operations where necessary. This may mean that at some positions on the lawn the maintenance device carries out maintenance more often than at other positions.

The maintenance plan comprises a system of physical characteristics of the artificial lawn and possibly at least one variable from the group of play use, e.g. play intensity variables, maintenance use, e.g. maintenance intensity, variables, time variables, positioning variables and climate variables.

As already said before, the maintenance plan comprises at least information regarding the carrying out or not of specific maintenance operations. More in particular, the maintenance plan has been drawn up on the basis of various variables. Thus, the number of playing hours can be included as a variable in the maintenance plan, so that it is ensured that specific maintenance operations are invariably carried after the artificial lawn has been played on a fixed number of times. Furthermore, climate variables may form part of the maintenance plan. In high air humidity conditions, less moisture or no moisture will need to be added to the artificial lawn.

Also data regarding previously carried out maintenance may be included as variables in the maintenance plan. Such information can be useful for future maintenance. If it appears from previous maintenance that less infill material is present near the goal area, for example, the maintenance plan may be adjusted so that extra infill material will already be added near the goal area.

The time variables may be included in the maintenance plan in such a manner that predetermined time blocks within which maintenance is to be carried out are input. In a practical embodiment, it may for example be elected to carry out maintenance exclusively during the nocturnal hours.

The maintenance plan also comprises physical characteristics of the artificial lawn. Such characteristics may be properties of the lawn, such as the type of fibres being used, or the amount of or the type of infill material. Said characteristics may also be variables, however, such as the rolling resistance of the ball, the height of the infill material, the presence of infill material, the moisture content of the lawn, the presence of dirt, etc.

In another embodiment, the control means are designed so that the maintenance plan is input into the control means prior to the carrying out of the maintenance operations.

The advantage of a maintenance plan is that it enables the installer or supplier of an artificial lawn to provide the control means with the maintenance plan in advance. In the maintenance plan it can be determined on the basis of a number of variables at what intervals and in what way maintenance is to be carried out. In the winter, for example, maintenance will more often comprise removing snow, and in the autumn it will more often comprise removing leaves. In the summer, moisture may be added to the artificial lawn for reducing friction between the lawn and players making a sliding tackle. Furthermore, fixed maintenance time intervals may be input in advance in order to be sure that sufficient maintenance will be carried out.

Said maintenance plan can be fed to the control means in the form of a programme. The control means may comprise a memory, which may be provided with the maintenance programme by the manufacturer prior to the delivery of the device. It may again be input into the control means at a later point in time, if desired, for example by inserting a memory carrier comprising the new programme or the new maintenance plan into the control means. In a practical embodiment, the control means are designed for receiving a USB key on which the maintenance plan is present in the form of a programme instruction.

In an alternative embodiment, the control means are so designed that they comprise wireless communication means, making it possible to feed the programme to the control means by remote control. The maintenance plan can thus be fed to the control means from a computer. This need not necessarily be the facility manager's computer, it may also be a computer of the supplier. This has the advantage that when the quality requirements made of artificial grass sports fields are changed (for example by organisations such as Fl FA), the supplier can send an updated version of the maintenance plan, in which said requirements are incorporated, to the control means. The control means are designed for adjusting the maintenance plan during the carrying out of the maintenance operations. The control means are designed for determining one or more variables from the maintenance plan.

The control means may comprise a user interface, by means of which the maintenance plan can be adjusted during the carrying out of the maintenance, for example by halting the maintenance altogether, carrying it out anew or, quite specifically, carrying out specific maintenance operations at a specific position.

The device is provided with means for determining said variable(s), said means comprising one or more sensors, the device is capable of locally drawing up or adjusting the maintenance plan. In one embodiment, the device may thus be provided with a weather station, or with communication means for downloading climate data so as to adjust the maintenance plan on the basis thereof.

The device is provided with one or more sensors for measuring particular properties of the lawn and carry out maintenance accordingly. In this regard all the usual test set-ups as used with artificial lawns may be considered. Examples of this include durability tests, ball or lawn surface properties and player/lawn interaction. In another embodiment, the device is provided with a sensor or test unit for measuring the density of the lawn, the amount of infill material, the height of the infill material, the distribution of infill material, the proportion (rubber/sand) of the infill material, the climate influences (UV, water, heat), shock absorption, vertical deformation, rotational resistance, skid resistance, friction, but also properties such as the reaction upon bouncing of a ball and the ball roll speed. Such tests can be carried out in accordance with the ISO and N EN standards that are known in this field of the art.

In another embodiment, the control means comprise fuzzy control logic for controlling the maintenance means on the basis of the aforesaid one or more physical characteristics of the artificial lawn.

In one embodiment, the maintenance plan can be drawn up on the basis of the data received from the sensor or test unit. This may mean that specific routes are followed or maintenance work is carried out in dependence on the sensor or test unit. Thus, the control means adjusts the maintenance plan, for example, in order to ensure that the entire lawn will be cleaned when a sensor detects snow on the lawn, or that the addition of infill material, or the redistribution thereof, is not stopped until a minimum height for the infill material is measured by a sensor.

In another embodiment, the device further comprises position determining means for determining the position of the device on the artificial lawn.

If the device is provided with position determining means, said means are capable of determining a precise position of the device in relation to the lawn. In another embodiment, said position determining means may be navigation means, which determine a position on the lawn by means of GPS, for example. Variants on this can also be used, however. Thus, the lawn may comprise means relative to which the device can determine its position. Said means may be optical beacons or radio beacons positioned at the edges of the lawn, but also magnetic beacons, for example, which are incorporated in the lawn or the lines.

In another embodiment, the maintenance operations on the artificial lawn comprise one or more operations from the group consisting of brushing, cleaning, filtering, spraying and decompacting the artificial lawn. In time, infill material can accumulate to such an extent that it will form substantially one solid whole. In that case little air remains between the individual infill particles. To obviate this, decompacting is carried out, that is, the particles are redistributed, for example by brushing the infill material. As a result, the amount of air between the particles will increase, so that the damping effect of the infill material will likewise increase.

Examples of maintenance operations to be carried out include all maintenance operations as known and carried out on artificial lawns. Example thereof are removing dirt, snow, spraying the lawn, brushing the fibres, decompacting the infill material, adding, filtering and/or removing infill material, etc.

The invention is also directed to a method for carrying out maintenance operations on an artificial lawn, in particular an artificial grass sports field, according to claim 11, using a maintenance device according claim 1, comprising the steps of drawing up a maintenance plan and controlling the maintenance means and the drive means in accordance with the maintenance plan. The control means are arranged for determining one or more variables of said maintenance plan and adjusting said maintenance plan accordingly, during carrying out said maintenance operations

The maintenance plan comprises physical characteristics of the artificial lawn and may comprise at least one or more variables from the group consisting of use variables, play use variables, maintenance variables, time variables, positioning variables and climate variables. In another embodiment, the maintenance operations comprise at least one operation from the group consisting of brushing, cleaning, filtering, spraying and decompacting the artificial lawn.

The invention will now be explained in more detail with reference to a drawing, in which:
Figure 1 is a schematic representation of an artificial lawn on which maintenance can be carried out by means of a device according to an embodiment of the invention;
Figure 2 is a schematic illustration of the device according to an embodiment of the invention.

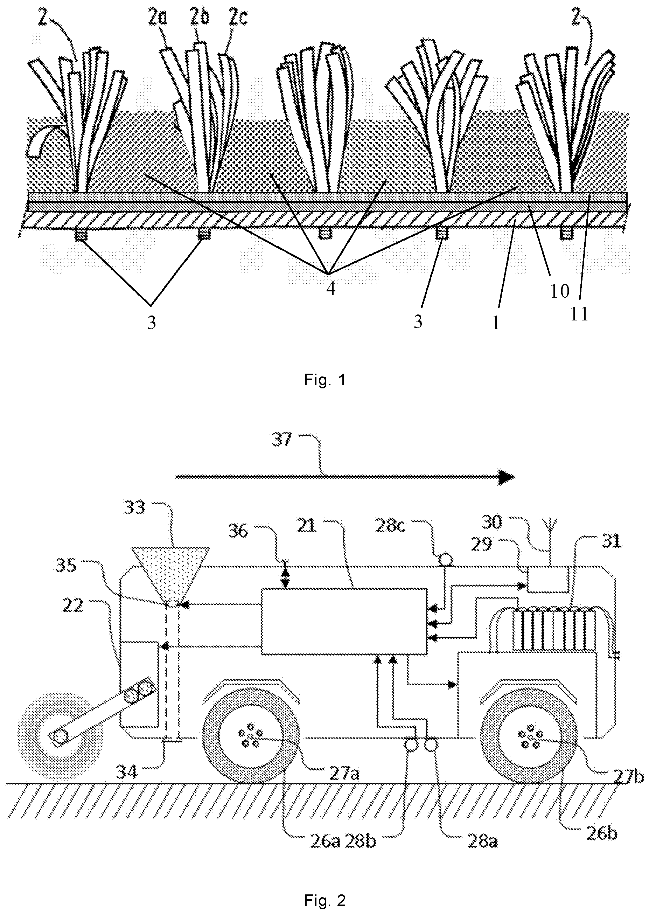

Figure 1 shows, by way of illustration, an artificial lawn on which maintenance can be carried out by means of a device according to the invention and in which a granular infill material is present between the synthetic fibres. In figure 1 the artificial lawn comprises a substrate 1. Several synthetic fibres 2 are attached to the substrate, for example by tufting or weaving 3. The synthetic fibre 2 may have any composition and be made of any plastic or a mixture of plastics. The synthetic fibre may be attached to the substrate either individually or in the form of a bundle of (for example twined) fibres 2a-2c. The synthetic fibre being used may be a fibrillated band fibre.

A granular infill material 4 is present between the synthetic fibres 2, which infill material 4 is shown strongly enlarged, solely for illustrative purposes, in the form of little balls. Such an artificial grass sports field comprising a granular infill material 4 is known per se and is used in all kinds of different embodiments. Usually, combinations of rubber particles and sand are used, but also other combinations may be used within the framework of the present invention.

In figure 2 an embodiment of the maintenance device 20 according to the invention is shown by way of illustration. The device is suitable for carrying out maintenance on an artificial lawn, for example an artificial lawn as shown in figure 1 . The device 20 comprises two wheel axles 27a, 27b and can be driven either via a first axle 27a or 27b or via both axles 27a, 27b, for moving in the direction of movement 37 across an artificial lawn as shown in figure 1. Driving is done by a motor, which drives the wheels 26b via the drive shaft 27b. This can take place in a conventional and generally known manner and does not fall within the framework of the present invention. Thus, driving can be done by electric motors present in or on the wheels.

The device 20 further comprises control means 21 consisting of a control circuit and at least one central processing unit (not shown). In the most general embodiment, the control means 21 are designed for controlling the maintenance means 22. In this example, the maintenance means is a brush which is connected to the chassis of the device 20 via a connecting arm. The brush is driven by the unit 22, enabling the brush to rotate so as to distribute sufficient infill material over the artificial lawn. In the present figure a brush is shown by way of illustration. However, the device may also comprise a different maintenance means. An example of this is a filter system provided with a suction nozzle for sucking up and filtering infill material or for removing dirt from the lawn. In another embodiment, the device 20 is provided with several maintenance means, each being designed to carry out a different maintenance task. Think in this connection of removing snow, applying anti-algae agents and the like, moisturising the lawn, removing dirt, removing infill material, replacing infill material, adding infill material, decompacting the lawn, etc.

In figure 2, the motor is controlled by the central processing unit 21. Thus, a maintenance plan present in the processing unit 21 can be carried out in such a manner that the device 20 can move autonomously across the lawn and carry out maintenance at the correct places.

In figure 2 a charging unit is shown, which functions to connect the device 20 to a charging station (not shown) for recharging the battery 31 present in the device 20. The processing unit 21 may to that end be configured so that it is connected to the battery for monitoring the terminal voltage thereof and routing the device 20 to the charging station for charging the battery 31 when said voltage drops to a minimum value.

The device 20 shown in figure 2 further comprises a communication unit 29, which is equipped with an antenna 30. Said communication unit may comprise a position determining unit 29 for determining the position of the device 20 relative to the lawn. In a simple embodiment, this may mean that the processing unit 21 receives a signal from the position determining unit 29 the moment the device 20 approaches or reaches the edge of the lawn. The processing unit 21 thus knows that the direction/route of the maintenance device 20 must be adjusted. The maintenance device travels along a particular route. Said route may exhibit a fixed or predictable pattern, in which parallel strips the width of the device 20 are covered one by one. The pattern may also be a seemingly random pattern, however, in which the device moves across the lawn in a criss-cross pattern and is corrected only when reaching an edge of the lawn. This may means that the maintenance device covers various positions on the lawn several times and maintenance is thus carried out more intensively at said positions, which may have a positive effect on the result. Depending on the requirements, such a routing may be opted for.

The communication unit 29 may furthermore also be configured as a navigation unit 29, by means of which the exact location of the device 20 can be determined by means of a satellite navigation system such as Global Positioning System, GPS. In an alternative embodiment, the communication unit 29 is designed for receiving radiographic, optical or magnetic signals for determining the position and routing on the basis thereof.

The device 20 further comprises an input unit 36 for inputting a maintenance plan into the device 20. The device 20 may be configured so that it can be locally programmed via the input unit 36, for example by reading a maintenance programme present on a storage medium or by adapting specific parameters in a graphic user Interface of the maintenance device 20. This enables a manager of the device 20 to carry out a maintenance run on site, to stop a maintenance run or to make other changes to the programme.

The device 20 further comprises a communication unit 29 for the remote inputting of a maintenance plan into the device 20. The communication 29 to that end comprises an antenna 30 for communication with a computer. A facility manager, maintenance mechanic, supplier or installer can thus communicate with the processing unit 21 via the communication unit 29. Thus, a maintenance programme can be transmitted to the processing unit 21 or be started, or certain parameters can be adjusted in a graphic user interface.

A maintenance programme can thus be started by remote control or be exchanged for a new version comprising a new maintenance plan. Furthermore, physical characteristics of the artificial lawn and maintenance variables such as use interval, time interval, climate variables and the like can be fed to the control unit 21 by means of the communication unit 29. This enables a manager to control the device remotely. For example, if the supplier of the lawn reads via the communication unit 29 that no maintenance has been carried out with the device 20 for a considerable period of time, he will be able to control the device 20 to carry out a maintenance run immediately.

In figure 2, numerals 28a, b, c indicate various sensor units. Said sensor units or sensors are capable of determining various variables. That is, the sensor unit 28a may for example comprise a temperature sensor and/or an air humidity sensor for determining the weather influences and if it is necessary to add moisture to the lawn. The sensor unit 28b may for example be configured as a sensor which can measure the height of the infill material. If it appears that little infill material is present in certain places, the sensor will be capable of determining this and informing the control unit 21 thereof. On the basis of said information, the brush may be actuated to redistribute the infill material. Alternatively, infill material may be added to the level at which the sensor unit 29b delivers a signal that the minimum required height has been reached. The device 20 is to that end provided with an infill material unit 33, 34, 35. It comprises a reservoir 33 that contains a supply of infill material. Infill material can be applied to the lawn from the reservoir, via the outlet 34, by a control valve 35 which is controlled by the control unit 21.

The sensor units 28a, b, c shown in figure 2 may also be test units by means of which (physical) characteristics of the lawn are tested. Sports federations, for example, impose certain requirements as regards the manner in which a ball reacts on the lawn, for example the extent to which the ball bounces, rolls or changes direction. Such tests can be carried out by the device to a certain extent and the results of said tests can be used for controlling the maintenance unit 20. Thus it is for example conceivable that a test shows that the rolling resistance is too high, which signifies that the amount of moisture in the lawn is too low. This information can be used by the control means for controlling the maintenance means of the device such that moisture is added to the lawn.

The device 20 may furthermore be configured so that it can record test results from test devices for incorporation into the maintenance plan. As a result, specific tests can be carried out on the lawn, using already existing artificial grass test set-ups, at regular intervals, for example as prescribed by the supplier of the lawn. The results of said tests can be fed to the maintenance device 20 by a computer via the communication unit 29 and be processed into a maintenance plan by the control means 21.

In a practical embodiment, the device may be incorporated in a maintenance system in such a manner that it communicates with a central computer via the communication unit. For that purpose, one or more tests may be carried out on the artificial lawn, using standard test equipment. The result of said test(s) can then be fed to the maintenance device 20. Said maintenance device can subsequently carry out maintenance in accordance with the results.

## Claims

1. A device (20) for carrying out maintenance operations on an artificial lawn, in particular an artificial grass sports field, which device is movable across the artificial lawn and which comprises:
maintenance means (22) for carrying out maintenance operations on an artificial lawn;
drive means for moving the device (20) autonomously across the artificial lawn; and
control means (21) for controlling the maintenance means (22) and the drive means on the basis of a maintenance plan,
**characterized in that** the device further comprises one or more sensors (28a, 28b, 28c) for determining one or more variables of said maintenance plan, wherein the one or more variables include physical characteristics of the artificial lawn, the sensors including at least one sensor (28a, 28b, 28c) for measuring physical characteristics of the artificial lawn and that the control means are arranged for adjusting said maintenance plan accordingly, during carrying out said maintenance operations.

2. A device (20) according to claim 1, wherein the sensor (28a, 28b, 28c) for measuring a property of the artificial lawn is configured to measure physical characteristics of the artificial lawn selected from: density of the lawn, an amount of infill material, a height of infill material, a distribution of infill material, a proportion of infill material, shock absorption, vertical deformation, rotational resistance, skid resistance, friction, reaction upon bouncing of a ball, and ball roll speed.

3. A device (20) according to claim 2, wherein the control means (21) are arranged for inputting, prior to carrying out said maintenance operations, one or more variables of said maintenance plan.

4. A device (20) according to one or more of the preceding claims, wherein the control means are arranged for inputting, prior to carrying out said maintenance operations, said maintenance plan.

5. A device (20) according to one or more of the preceding claims, wherein the maintenance means comprises a filter system provided with a suction nozzle for sucking up and filtering infill material.

6. A device (20) according to one or more of the preceding claims, wherein the one or more sensors (28b) is configured to measure the height of infill material and the maintenance means comprises means (33) for redistribution or means for adding infill material.

7. A device (20) according to one or more of the preceding claims, wherein the control means (21) comprise fuzzy control logic for carrying out at least one maintenance operation in correspondence with one or more physical characteristics of said artificial lawn.

8. A device (20) according to one or more of the preceding claims, wherein the device further comprises position determining means (29) for determining the position of the device on said artificial lawn.

9. A device (20) according to one or more of the preceding claims, wherein the device further comprises navigation means for determining a route of the device on the artificial lawn.

10. A device (20) according to one or more of the preceding claims, wherein said at least one maintenance operation on said artificial lawn comprises one or more operations from the group comprising brushing, cleaning, filtering, spraying and decompacting said artificial lawn.

11. A method for carrying out maintenance operations on an artificial lawn, in particular an artificial grass sports field, using a maintenance device (20) according to any one of the preceding claims, which method comprises the steps of:
drawing up a maintenance plan; and
controlling said maintenance means and said drive means in accordance with said maintenance plan, wherein the one or more sensors (28a, 28b, 28c) are arranged for determining the one or more variables of said maintenance plan and the control means (21) are arranged for adjusting said maintenance plan accordingly, during carrying out said maintenance operations.

12. A method according to claim 11, wherein said maintenance operations comprise at least one or more operations from the group comprising brushing, cleaning, filtering, spraying and decompacting said artificial lawn.

13. A method according to one or more of claims 11 to 12, wherein the maintenance means comprises a filter system provided with a suction nozzle and the method comprises sucking up and filtering infill material.

14. A method according to one or more of claims 11 to 13, wherein the one or more sensors (28b) is configured to measure the height of infill material and the method comprises redistributing or adding infill material.

## Patentansprüche

1. Vorrichtung (20) zum Ausführen von Instandhaltungsarbeiten auf einem Kunstrasen, insbesondere einem Kunstgras-Sportplatz, welche Vorrichtung über den Kunstrasen bewegbar ist und welche aufweist:
ein Instandhaltungsmittel (22) zum Ausführen von Instandhaltungsarbeiten auf einem Kunstrasen;
ein Antriebsmittel zum autonomen Bewegen der Vorrichtung (20) über den Kunstrasen; und
einem Steuerungsmittel (21) zum Steuern des Instandhaltungsmittels (22) und des Antriebsmittels auf der Basis eines Instandhaltungsplans,
**dadurch gekennzeichnet, dass** die Vorrichtung ferner einen oder mehrere Sensoren (28a, 28b, 28c) zum Bestimmen von einer oder mehreren Variablen des Instandhaltungsplans aufweist, wobei die eine oder die mehreren Variablen physikalische Eigenschaften des Kunstrasens umfassen, die Sensoren mindestens einen Sensor (28a, 28b, 28c) zum Messen von physikalischen Eigenschaften des Kunstrasens umfassen und, dass das Steuerungsmittel zum entsprechenden Einstellen des Instandhaltungsplans eingerichtet ist, während die Instandhaltungsarbeiten ausgeführt werden.

2. Vorrichtung (20) nach Anspruch 1, wobei der Sensor (28a, 28b, 28c) zum Messen einer Beschaffenheit des Kunstrasens dazu konfiguriert ist, physikalische Eigenschaften des Kunstrasens zu messen, die aus einer Dichte des Rasens, einer Menge eines Einfüllmaterials, einer Höhe eines Einfüllmaterials, einer Verteilung eines Einfüllmaterials, einem Anteil eines Einfüllmaterials, einer Stoßabsorption, einer vertikalen Verformung, einem Drehwiderstand, einem Rutschwiderstand, einer Reibung, einer Reaktion beim Aufprall eines Balls und einer Ballrollgeschwindigkeit ausgewählt wird.

3. Vorrichtung (20) nach Anspruch 2, wobei das Steuerungsmittel (21) zum Eingeben von einer oder mehreren Variablen des Instandhaltungsplans, vor dem Ausführen der Instandhaltungsarbeiten, eingerichtet ist.

4. Vorrichtung (20) nach einem der voranstehenden Ansprüche, wobei das Steuerungsmittel zum Eingeben des Instandhaltungsplans, vor dem Ausführen der Instandhaltungsarbeiten, eingerichtet ist.

5. Vorrichtung (20) nach einem der voranstehenden Ansprüche, wobei das Instandhaltungsmittel ein Filtersystem aufweist, das mit einer Saugdüse zum Aufsaugen und Filtern von Einfüllmaterial versehen ist.

6. Vorrichtung (20) nach einem der voranstehenden Ansprüche, wobei der eine oder die mehreren Sensoren (28b) konfiguriert ist/sind, die Höhe eines Einfüllmaterials zu messen, und das Instandhaltungsmittel ein Mittel (33) zur Umverteilung oder ein Mittel zum Hinzufügen von Einfüllmaterial aufweist.

7. Vorrichtung (20) nach einem der voranstehenden Ansprüche, wobei das Steuerungsmittel (21) eine Fuzzy-Steuerungslogik zum Ausführen von mindestens einer Instandhaltungsarbeit in Übereinstimmung mit einer oder mehreren physikalischen Eigenschaften des Kunstrasens aufweist.

8. Vorrichtung (20) nach einem der voranstehenden Ansprüche, wobei die Vorrichtung ferner ein Positionsbestimmungsmittel (29) zum Bestimmen der Position der Vorrichtung auf dem Kunstrasen aufweist.

9. Vorrichtung (20) nach einem der voranstehenden Ansprüche, wobei die Vorrichtung ferner ein Navigationsmittel zum Bestimmen einer Route der Vorrichtung auf dem Kunstrasen aufweist.

10. Vorrichtung (20) nach einem der voranstehenden Ansprüche, wobei die mindestens eine Instandhaltungsarbeit auf dem Kunstrasen eine oder mehrere Arbeiten aus der Gruppe aufweist, die ein Bürsten, ein Reinigen, ein Filtern, ein Besprühen und ein Dekompaktieren des Kunstrasens aufweist.

11. Verfahren zum Ausführen von Instandhaltungsarbeiten auf einem Kunstrasen, insbesondere einem Kunstgras-Sportplatz, indem eine Instandhaltungsvorrichtung (20) nach einem der voranstehenden Ansprüche verwendet wird, welches Verfahren die Schritte
Aufstellen eines Instandhaltungsplans; und
Steuern des Instandhaltungsmittels und des Antriebsmittels in Übereinstimmung mit dem Instandhaltungsplan aufweist, wobei der eine oder die mehreren Sensoren (28a, 28b, 28c) zum Bestimmen der einen oder mehreren Variablen des Instandhaltungsplans eingerichtet ist/sind und das Steuerungsmittel (21) zum entsprechenden Einstellen des Instandhaltungsplans eingereichtet ist, während die Instandhaltungsarbeiten ausgeführt werden.

12. Verfahren nach Anspruch 11, wobei die Instandhaltungsarbeiten mindestens eine oder mehrere Arbeiten aus der Gruppe aufweisen, die ein Bürsten, ein Reinigen, ein Filtern, ein Besprühen und ein Dekompaktieren des Kunstrasens aufweist.

13. Verfahren nach einem der Ansprüche 11 bis 12, wobei das Instandhaltungsmittel ein Filtersystem aufweist, das mit einer Saugdüse versehen ist, und das Verfahren ein Aufsaugen und Filtern von Einfüllmaterial aufweist.

14. Verfahren nach einem der Ansprüche 11 bis 13, wobei der eine oder die mehreren Sensoren (28b) konfiguriert ist/sind, die Höhe eines Einfüllmaterials zu messen, und das Verfahren ein Umverteilen oder Hinzufügen von Einfüllmaterial aufweist.

## Revendications

1. Dispositif (20) pour exécuter des opérations d'entretien sur un gazon artificiel, en particulier un terrain de sport en gazon artificiel, lequel dispositif pouvant être déplacé d'un côté à l'autre du gazon artificiel et qui comprend :
des moyens d'entretien (22) permettant d'effectuer des opérations d'entretien sur un gazon artificiel ;
des moyens d'entraînement permettant de déplacer le dispositif (20) de manière autonome d'un côté à l'autre du gazon artificiel ; et
des moyens de commande (21) permettant de commander les moyens d'entretien (22) et les moyens d'entraînement sur la base d'un programme d'entretien,
**caractérisé en ce que** le dispositif comprend en outre un ou plusieurs capteurs (28a, 28b, 28c) permettant de déterminer une ou plusieurs variables dudit programme d'entretien, dans lequel les une ou plusieurs variables comprennent des caractéristiques physiques du gazon artificiel, les capteurs comprenant au moins un capteur (28a, 28b, 28c) permettant de mesurer des caractéristiques physiques du gazon artificiel, et **en ce que** les moyens de commande sont agencés pour ajuster ledit programme d'entretien en conséquence, lors de l'exécution desdites opérations d'entretien.

2. Dispositif (20) selon la revendication 1, dans lequel le capteur (28a, 28b, 28c) permettant de mesurer une propriété du gazon artificiel est configuré pour mesurer des caractéristiques physiques du gazon artificiel sélectionnées parmi : la densité du gazon, une quantité de matériau de remplissage, une hauteur de matériau de remplissage, une distribution de matériau de remplissage, une proportion de matériau de remplissage, une absorption de choc, une déformation verticale, une résistance à la rotation, une résistance au dérapage, un frottement, une réaction lors du rebond d'une balle et une vitesse de roulement de balle.

3. Dispositif (20) selon la revendication 2, dans lequel les moyens de commande (21) sont agencés pour entrer une ou plusieurs variables dudit programme d'entretien avant d'exécuter lesdites opérations d'entretien.

4. Dispositif (20) selon une ou plusieurs des revendications précédentes, dans lequel les moyens de commande sont agencés pour entrer ledit programme d'entretien avant d'exécuter lesdites opérations d'entretien.

5. Dispositif (20) selon une ou plusieurs des revendications précédentes, dans lequel les moyens d'entretien comprennent un système de filtre pourvu d'une buse d'aspiration pour aspirer et filtrer du matériau de remplissage.

6. Dispositif (20) selon une ou plusieurs des revendications précédentes, dans lequel les un ou plusieurs capteurs (28b) sont configurés pour mesurer la hauteur de matériau de remplissage et les moyens d'entretien comprennent des moyens (33) de redistribution ou des moyens d'ajout de matériau de remplissage.

7. Dispositif (20) selon une ou plusieurs des revendications précédentes, dans lequel les moyens de commande (21) comprennent une logique de commande floue pour exécuter au moins une opération d'entretien en correspondance avec une ou plusieurs caractéristiques physiques dudit gazon artificiel.

8. Dispositif (20) selon une ou plusieurs des revendications précédentes, dans lequel le dispositif comprend en outre des moyens de détermination de position (29) pour déterminer la position du dispositif sur ledit gazon artificiel.

9. Dispositif (20) selon une ou plusieurs des revendications précédentes, dans lequel le dispositif comprend en outre des moyens de navigation pour déterminer un itinéraire du dispositif sur le gazon artificiel.

10. Dispositif (20) selon une ou plusieurs des revendications précédentes, dans lequel ladite au moins une opération d'entretien sur ledit gazon artificiel comprend une ou plusieurs opérations du groupe comprenant un brossage, un nettoyage, un filtrage, une pulvérisation et un décompactage dudit gazon artificiel.

11. Méthode pour exécuter des opérations d'entretien sur un gazon artificiel, en particulier un terrain de sport en gazon artificiel, en utilisant un dispositif d'entretien (20) selon l'une quelconque des revendications précédentes, laquelle méthode comprend les étapes consistant à :
élaborer un programme d'entretien ; et
commander lesdits moyens d'entretien et lesdits moyens d'entraînement conformément audit programme d'entretien, dans laquelle les un ou plusieurs capteurs (28a, 28b, 28c) sont agencés pour déterminer les une ou plusieurs variables dudit programme d'entretien et les moyens de commande (21) sont agencés pour ajuster ledit programme d'entretien en conséquence, lors de l'exécution desdites opérations d'entretien.

12. Méthode selon la revendication 11, dans laquelle lesdites opérations d'entretien comprennent au moins une ou plusieurs opérations du groupe comprenant un brossage, un nettoyage, un filtrage, une pulvérisation et un décompactage dudit gazon artificiel.

13. Méthode selon une ou plusieurs des revendications 11 à 12, dans laquelle les moyens d'entretien comprennent un système de filtre muni d'une buse d'aspiration et la méthode comprend l'aspiration et le filtrage d'un matériau de remplissage.

14. Méthode selon une ou plusieurs des revendications 11 à 13, dans laquelle les un ou plusieurs capteurs (28b) sont configurés pour mesurer la hauteur de matériau de remplissage et la méthode comprend la redistribution ou l'ajout de matériau de remplissage.
